# EUROPEAN PATENT APPLICATION

(11) **EP 3 587 856 A1**
(43) Date of publication of application: **01.01.2020**
(21) Application number: 18756718.5
(22) Date of filing: 01.02.2018
(51) Int. Cl.: F16F 15/134, F16D 13/64

(54) **DAMPER DEVICE**

(30) Priority: 27.02.2017 JP 2017035376
(71) Applicant: Aisin Seiki Kabushiki Kaisha, Kariya-shi, Aichi 448-8650 (JP)
(72) Inventor: IMOO, Kenichi, KARIYA-SHI, AICHI-KEN 448-8650 (JP); TOKUMORI, Shinpei, KARIYA-SHI, AICHI-KEN 448-8650 (JP); SAEKI, Tomohiro, KARIYA-SHI, AICHI-KEN 448-8650 (JP); NARUSE, Masayuki, KARIYA-SHI, AICHI-KEN 448-8650 (JP)
(74) Representative: Cabinet Beau de Loménie
(86) International application number: PCT/JP2018/003436
(87) International publication number: WO 2018/155125

(57) **Abstract**

A damper device according to an embodiment includes a second rotational element and a coupling member. The second rotational element includes a first member and a second member disposed apart from the first member in an axial direction. The coupling member includes: a restrictor located between the first member and the second member; a first fixing member protruding from the restrictor, being inserted into a first hole provided to the first member, and being fixed to the first member; a second fixing member protruding in the axial direction from the restrictor, being inserted into a second hole provided to the second member, and being fixed to the second fixing member; and a first protrusion protruding from the restrictor in a first direction intersecting the axial direction. The coupling member couples the first member and the second member.

## Description

### TECHNICAL FIELD

Embodiments of the present invention relate to a damper device.

### BACKGROUND ART

Conventionally, damper devices to be installed between output shafts of engines and input shafts of transmissions have been known. Such a damper device includes, for example, two rotational elements, one of which is connected to the output shaft and the other of which is connected to the input shaft, and coil springs and thrust members interposed between the rotational elements. Such a damper device attenuates fluctuation in rotation input from the engine with the coil springs and the thrust members.

One of the two rotational elements includes two plates juxtaposed in an axial direction of the output and input shafts, for example. The other of the two rotational elements is disposed between the two plates and rotatable with respect to the two plates. The two plates are coupled together with coupling members such as pins so as to be rotatable together (Patent Document 1).

### CITATION LIST

### Patent Literature

Patent Document 1: Japanese Patent Application Laid-open No. 2004-278727

### SUMMARY OF INVENTION

### PROBLEM TO BE SOLVED BY THE INVENTION

Conventionally, the pins are fixed to the two plates by processing accompanying deformation such as caulking, for example. At the time of attaching the pins by caulking, part of the pins supporting the plates may be deformed by pressure from caulking, which may change the two plates in posture and shape.

The invention is made in view of the above described problem, and aims to provide a damper device that can prevent undesired deformation of a coupling member.

### MEANS FOR SOLVING PROBLEM

A damper device according to one embodiment of the present invention, for example, includes: a first rotational element configured to be rotatable around a rotation center; a second rotational element including: a first member, and a second member being spaced apart from the first member in an axial direction of the rotation center and being rotatable around the rotation center together with the first member; an elastic element that is located between the first rotational element and the second rotational element and elastically compressed by rotation of the first rotational element around the rotation center with respect to the second rotational element; and a coupling member that couples the first member and the second member, the coupling member including: a restrictor located between the first member and the second member, the restrictor that restricts the first member and the second member from mutually approaching, a first fixing member that protrudes in the axial direction of the rotation center from the restrictor, is inserted into a first hole in the first member, and is fixed to the first member, a second fixing member that protrudes in the axial direction of the rotation center from the restrictor, is inserted into a second hole in the second member, and is fixed to the second member, and a first protrusion that protrudes in a first direction from the restrictor, the first direction intersecting the axial direction of the rotation center. As an exemplary result, stiffness of the restrictor is increased, thereby preventing undesired deformation of the restrictor.

According to the above damper device, for example, the first protrusion is longer in length in the axial direction of the rotation center than in a second direction, the second direction perpendicular to the axial direction of the rotation center and perpendicular to the first direction. As an exemplary result, stiffness of the restrictor in the axial direction of the rotation center is increased, thereby preventing undesired deformation of the restrictor.

According to the above damper device, for example, the coupling member is provided with a recess that is located opposite the first protrusion and extends in a direction in which the first protrusion extends. When the first protrusion and the recess are formed, half-blanking can be used that pushes the surface on which the recess is provided, for example. The portion on which the half-blanking is performed of the coupling member increases the stiffness by work hardening. As an exemplary result, stiffness of the restrictor is increased, thereby preventing undesired deformation of the restrictor.

According to the above damper device, for example, in the second direction perpendicular to the axial direction of the rotation center and perpendicular to the first direction, the first protrusion is located between both ends of the first fixing member. As an exemplary result, stiffness of the portions on which pressure acts when the first and the second fixing members are fixed to the first and the second members by caulking, respectively, is increased, thereby preventing undesired deformation of the restrictor.

According to the above damper device, for example, the restrictor has a circumference that faces in a direction intersecting the axial direction of the rotation center, and the first protrusion has: a first end that protrudes from the circumference and is apart from one edge of the circumference in the axial direction of the rotation center, and a second end that is apart from the other edge of the circumference in the axial direction of the rotation center. As an exemplary result, deformation of the portion facing the first member or the second member of the restrictor is prevented when the first protrusion is formed.

According to the above damper device, for example, the coupling member further includes a second protrusion that protrudes from the restrictor in the first direction and extends from the first end of the first protrusion in a direction intersecting the axial direction of the rotation center and intersecting the first direction. As an exemplary result, the stiffness of the portion on which pressure acts when the first fixing member is fixed to the first member by caulking is increased, thereby preventing undesired deformation of the restrictor.

According to the above damper device, for example, the first protrusion protrudes from the restrictor to radially outside the rotation center. As an exemplary result, it is prevented that the first protrusion interferes with another member such as the first rotational element. In addition, strength against force bending the restrictor to radially outward is increased, thereby preventing the restrictor from being bent to radially outward.

According to the above damper device, for example, the restrictor has a first surface that faces radially outside the rotation center and a second surface that faces radially inside the rotation center, the first protrusion protrudes from the first surface to radially outside the rotation center, and a length of the first protrusion in a radial direction of the rotation center is 0.2 to 0.8 times a distance between the first surface and the second surface. As an exemplary result, undesired deformation of the restrictor is prevented when the first protrusion is formed by a method such as half-blanking.

According to the above damper device, for example, the restrictor has a first surface and a second surface, the first surface that faces radially outside the rotation center, the second surface that faces radially inside the rotation center, the first protrusion protrudes from the first surface to radially outside the rotation center, and the second surface is provided with the recess. As an exemplary result, force is generated that cancels force bending the restrictor to radially outward, thereby preventing the restrictor from being bent to radially outward.

According to the above damper device, for example, the recess and the first protrusion have the same size. When the first protrusion and the recess are formed, half-blanking can be used that pushes the surface on which the recess is provided, for example. The portion on which the half-blanking is performed of the coupling member increases the stiffness by work hardening. As an exemplary result, stiffness of the restrictor is increased, thereby preventing undesired deformation of the restrictor.

According to the above damper device, for example, in the second direction perpendicular to the axial direction of the rotation center and perpendicular to the first direction, the first protrusion is shorter in length than the first fixing member and the second fixing member. As an exemplary result, stiffness of the portions on which pressure acts when the first and the second fixing members are fixed to the first and the second members by caulking, respectively, is increased, thereby preventing undesired deformation of the restrictor.

According to the above damper device, for example, the restrictor has a circumference that faces in a direction intersecting the axial direction of the rotation center, and the first protrusion protrudes from the circumference and extends from one edge to the other edge of the circumference in the axial direction of the rotation center. As an exemplary result, occurrence of stress concentration on the boundary between the first protrusion and the circumference is prevented. This allows stress to be easily released, thereby increasing strength of the restrictor. Consequently, undesired deformation of the restrictor is prevented.

According to the above damper device, for example, in the second direction perpendicular to the axial direction of the rotation center and perpendicular to the first direction, the second protrusion is shorter in length than the first fixing member and the second fixing member. As an exemplary result, stiffness of the portions on which pressure acts when the first and the second fixing members are fixed to the first and the second members by caulking, respectively, is increased, thereby preventing undesired deformation of the restrictor.

### BRIEF DESCRIPTION OF DRAWINGS

FIG. 1 is a cross-sectional view illustrating an example of a damper device according to a first embodiment;
FIG. 2 is a front view illustrating the example of the damper device in the first embodiment;
FIG. 3 is a plan view illustrating a coupling member in the first embodiment;
FIG. 4 is a front view illustrating the coupling member in the first embodiment;
FIG. 5 is a cross-sectional view partially illustrating a first disk plate, a second disk plate, and the coupling member in the first embodiment;
FIG. 6 is a plan view illustrating the coupling member and the first disk plate before caulking in the first embodiment;
FIG. 7 is a cross-sectional view partially illustrating the first and the second disk plates, and the coupling member according to a second embodiment;
FIG. 8 is a cross-sectional view partially illustrating the first and the second disk plates, and the coupling member according to a third embodiment;
FIG. 9 is a plan view illustrating the coupling member according to a fourth embodiment;
FIG. 10 is a front view illustrating the coupling member in the fourth embodiment;
FIG. 11 is a cross-sectional view partially illustrating the first disk plate and the coupling member according to a fifth embodiment;
FIG. 12 is a cross-sectional view along the line F12-F12 in FIG. 11 and partially illustrates the first disk plate and the coupling member in the fifth embodiment;
FIG. 13 is a cross-sectional view partially illustrating the first disk plate and the coupling member according to a first modification of the fifth embodiment;
FIG. 14 is a cross-sectional view partially illustrating the first disk plate and the coupling member according to a second modification of the fifth embodiment;
FIG. 15 is a cross-sectional view partially illustrating the first disk plate and the coupling member according to a

### sixth embodiment; and

FIG. 16 is a cross-sectional view partially illustrating the first disk plate and the coupling member according to a seventh embodiment.

### DESCRIPTION OF EMBODIMENTS

### First embodiment

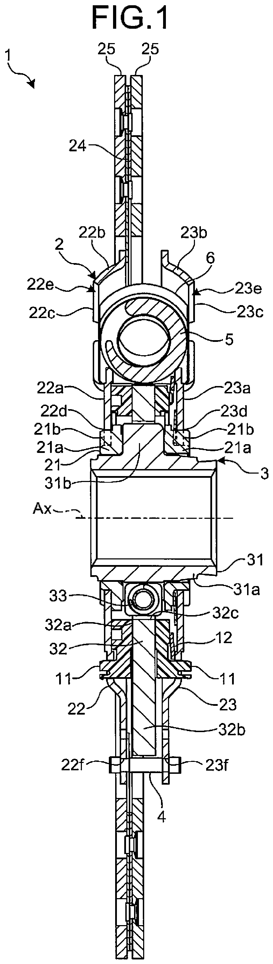

The following describes a first embodiment with reference to FIGS. 1 to 6. In the present specification, constituent elements according to the embodiments and descriptions thereof are described with multiple expressions in some cases. The constituent elements and descriptions thereof described with multiple expressions may be described with other expressions other than those described herein. In addition, constituent elements and descriptions thereof that are not described with multiple expressions may also be described with other expressions other than those described herein.

FIG. 1 is a cross-sectional view illustrating an example of a damper device 1 according to the first embodiment. As illustrated in FIG. 1, the damper device 1 includes a side plate 2 outside, a clutch hub 3 inside, and a plurality of coupling members 4. The side plate 2 is an example of a second rotational element. The side plate 2 can also be called a drive plate, for example. The clutch hub 3 is an example of a first rotational element. The clutch hub 3 can also be called a driven plate, for example. The coupling member 4 can also be called a connecting member or a pin, for example.

The side plate 2 and the clutch hub 3 are each rotatable around an axis Ax illustrated in FIG. 1. The axis Ax is an example of a rotation center. Hereinafter, the direction perpendicular to the axis Ax is called a radial direction, the direction along the axis Ax is called an axial direction, and a direction of rotation around the axis Ax is called a circumferential direction or a rotation direction. The side plate 2 can rotate independently from the clutch hub 3. In other words, the side plate 2 and the clutch hub 3 can rotate relative to each other.

The side plate 2 is connected to a crank shaft of an engine via a flywheel, for example. The side plate 2 is not limited to being connected to the engine. The side plate 2 may be connected to another drive source such as a motor, or another device.

The crank shaft extends along the axis Ax. The flywheel has a disk shape expanding in the radial direction, for example. The engine rotates the flywheel via the crank shaft, thereby causing the side plate 2 to rotate together with the flywheel. Rotation generated by the engine is transmitted to the side plate 2 via the flywheel.

The side plate 2 includes a bush 21, a first disk plate 22, a second disk plate 23, a supporting plate 24, and two linings 25 in this order from the axis Ax. The first disk plate 22 is an example of a first member. The second disk plate 23 is an example of a second member. The supporting plate 24 can also be called a cushion spring, for example. The lining 25 can also be called a friction material, for example.

The bush 21 includes two bosses 21a and a plurality of tabs 21b. The boss 21a has a substantially tubular shape extending along the axis Ax. The two bosses 21a are arranged side by side with a gap in the axial direction. The tabs 21b protrude radially outward from an outer circumference of the boss 21a for each of the two bosses 21a.

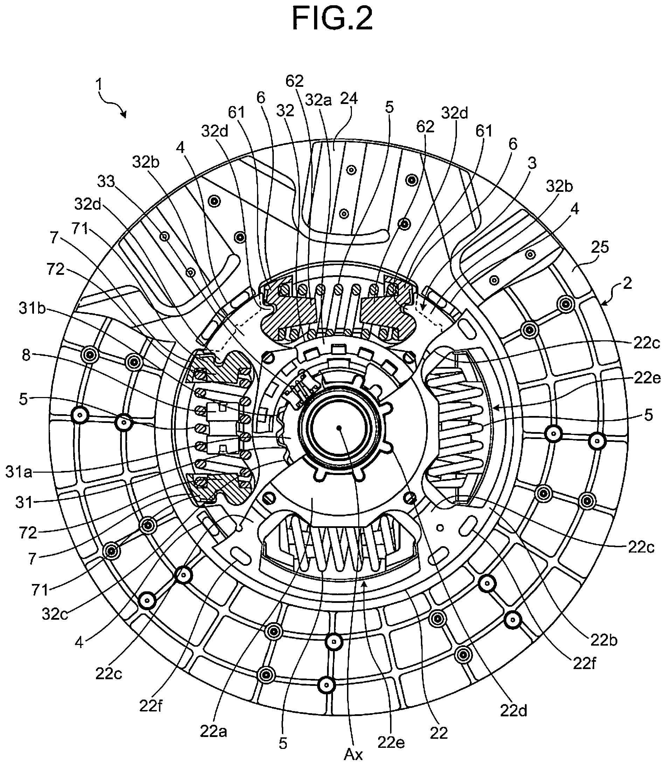

FIG. 2 is a front view illustrating an example of the damper device 1 in the first embodiment in a state where a part of the first disk plate 22 is cut. As illustrated in FIGS. 1 and 2, the first disk plate 22 and the second disk plate 23 have a disk shape expanding in the radial direction. The first disk plate 22 includes an inner frame 22a, an outer frame 22b and a plurality of frames 22c while the second disk plate 23 includes an inner frame 23a, an outer frame 23b and a plurality of frames 23c.

The inner frames 22a and 23a have an annular shape expanding in the radial direction. The inner frame 22a is provided with a spline 22d while the inner frame 23a is provided with a spline 23d. The spline 22d is formed of a plurality of grooves extending in the radial direction from an inner periphery of the inner frame 22a having an annular shape while the spline 23d is formed by a plurality of grooves extending in the radial direction from an inner periphery of the inner frame 23a having an annular shape.

As illustrated in FIG. 1, one boss 21a of the bush 21 is fitted inside the inner frame 22a while the other boss 21a of the bush 21 is fitted inside the inner frame 23a. The tabs 21b protrude from one boss 21a and are fitted in the spline 22d of the first disk plate 22 while the tabs 21b protrude from the other boss 21a and are fitted in the spline 23d of the second disk plate 23. As a result, the first disk plate 22, the second disk plate 23, and the bush 21 can rotate together around the axis Ax.

As illustrated in FIG. 2, the outer frame 22b has an annular shape surrounding the inner frame 22a with a gap therebetween while the outer frame 23b has an annular shape surrounding the inner frame 23a with a gap therebetween. The frames 22c connect the outer periphery side of the inner frame 22a and the inner periphery side of the outer frame 22b while the frames 23c connect the outer periphery side of the inner frame 23a and the inner periphery side of the outer frame 23b.

The frames 22c extend in the radial direction from the inner frame 22a while the frames 23c extend in the radial direction from the inner frame 23a. In the embodiment, four frames 22c and four frames 23c are arranged in the circumferential direction at intervals of 90°, for example. The arrangement of the frames 22c and 23c are not limited to this example.

The inner frame 22a, the outer frame 22b, and the frames 22c form a plurality of openings 22e while the inner frame 23a, the outer frame 23b, and the frames 23c form a plurality of openings 23e. The openings 22e and 23e expose the inside of the damper device 1 covered by the first disk plate 22 and the second disk plate 23.

As illustrated in FIG. 1, the first disk plate 22 and the second disk plate 23 are arranged side by side with a gap in the axial direction. In other words, the second disk plate 23 is disposed apart from the first disk plate 22 in the axial direction. The first disk plate 22 and the second disk plate 23 are coupled together with the multiple coupling members 4.

The coupling members 4 are fixed to the first disk plate 22 and the second disk plate 23 by caulking, for example. The coupling members 4 limit relative rotation between the first disk plate 22 and the second disk plate 23. As a result, the second disk plate 23 can rotate together with the first disk plate 22 around the axis Ax.

The first disk plate 22 and the second disk plate 23 have substantially the same shape, however, they may have different shapes from each other. The inner frames 22a and 23a, the outer frames 22b and 23b, and the frames 22c and 23c of the first disk plate 22 and the second disk plate 23 are arranged side by side in the axial direction. The openings 22e of the first disk plate 22 and the openings 23e of the second disk plate 23 are, thus, provided at the positions corresponding to each other.

The supporting plate 24 has an annular shape having a size larger than the outer frame 22b of the first disk plate 22 and the outer frame 23b of the second disk plate 23. The inner periphery of the supporting plate 24 is attached to the outer frame 22b of the first disk plate 22 with screws and the coupling members 4, for example. The supporting plate 24 overhangs to radially outward from the outer frame 22b of the first disk plate 22. The supporting plate 24 may be attached to another.

The linings 25 have an annular shape surrounding one of the first disk plate 22 and the second disk plate 23 with a gap, for example. The two linings 25 are attached to both sides in the axial direction of the outer periphery of the supporting plate 24 at the outer periphery of the supporting plate 24. The two linings 25 are in contact with the flywheel. Along with rotation of the flywheel, the side plate 2 is rotated by friction force between the flywheel and the linings 25.

The clutch hub 3 is connected to a transmission via the input shaft, for example. The clutch hub 3 is not limited to being connected to the transmission. The clutch hub 3 may be connected to another device such as a motor. The clutch hub 3 includes an inner hub 31, an outer hub 32, and a spring 33.

The inner hub 31 includes a boss 31a and a plurality of locking portions 31b. The boss 31a has a substantially tubular shape extending along the axis Ax. The input shaft is fitted inside the boss 31a such that the input shaft can transfer rotation.

The boss 31a of the inner hub 31 is fitted into the bosses 21a of the bush 21. The boss 31a of the inner hub 31 and the bosses 21a of the bush 21 can relatively rotate around the axis Ax.

The multiple locking portions 31b each protrude in the radial direction from the outer circumference of the boss 31a. The locking portions 31b are located between the two bosses 21a of the bush 21 of the side plate 2 in the axial direction.

The outer hub 32 is disposed between the first disk plate 22 and the second disk plate 23 in the axial direction. The outer hub 32 is not limited to being disposed as described above. The outer hub 32 may be disposed outside the first disk plate 22 and the second disk plate 23. As illustrated in FIG. 2, the outer hub 32 includes an intermediate part 32a and a plurality of arms 32b.

The intermediate part 32a has an annular shape expanding in the radial direction. The intermediate part 32a is provided with a spline 32c. The spline 32c is formed by a plurality of grooves extending in the radial direction from the inner periphery of the intermediate portion 32a having an annular shape.

As illustrated in FIG. 1, the boss 31a of the inner hub 31 is fitted inside the outer hub 32. The boss 31a of the inner hub 31 and the outer hub 32 can relatively rotate around the axis Ax.

The locking portions 31b of the inner hub 31 are fitted in the spline 32c of the outer hub 32. In the circumferential direction, there is a gap between an end of the spline 32c of the outer hub 32 and an end of the tab 31b of the inner hub 31. As a result, the inner hub 31 and the outer hub 32 can rotate relatively in a certain angle range.

The spring 33 is a coil-shaped compression spring. The spring 33 is disposed in a gap between the end of the spline 32c of the outer hub 32 and the end of the tab 31b of the inner hub 31 in the circumferential direction. In other words, the spring 33 is interposed between the inner hub 31 and the outer hub 32 in the circumferential direction.

When the inner hub 31 and the outer hub 32 rotate relatively around the axis Ax, the spring 33 is compressed by the outer hub 32 and the inner hub 31. The spring 33 applies force on the inner hub 31 and the outer hub 32 that relatively rotate in a direction around the axis Ax so as to cause the inner hub 31 and the outer hub 32 to rotate in the opposite direction.

The multiple arms 32b of the outer hub 32 extend in the radial direction from the intermediate portion 32a. In the embodiment, four arms 32b are arranged in the circumferential direction at intervals of 90°, for example. In the radial direction, the length from the axis Ax to the outer circumference of the arm 32b is shorter than the length from the axis Ax to the outer circumference of the outer frame 22b of the first disk plate 22 and the length from the axis Ax to the outer circumference of the outer frame 23b of the second disk plate 23.

When no external force acts on the side plate 2 and the clutch hub 3 as illustrated in FIG. 2, the arms 32b of the outer hub 32 overlap with the frames 22c of the first disk plate 22 and the frames 23c of the second disk plate 23 in the axial direction. The positions of the arms 32b of the outer hub 32, the frames 22c of the first disk plate 22, and the frames 23c of the second disk plate 23 are not limited to those described above.

The arm 32b is provided with two overhangs 32d at its distal end. The overhangs 32d protrude from the tip of the arm 32b to both sides in the circumferential direction. In other words, the two overhangs 32d protrude from the tip of the arm 32b in the opposite directions in the circumferential direction.

The damper device 1 further includes four torsion springs 5, four first sheets 6, four second sheets 7, and two cushions 8. The numbers of torsion springs 5, first sheets 6, second sheets 7, and cushions 8 are not limited to those described above. The torsion spring 5 is an example of the elastic element.

The torsion spring 5 is a coil-shaped compressed spring (coil spring). In the circumferential direction, the torsion spring 5 is located between the arm 32b of the outer hub 32 and the frame 22c of the first disk plate 22 and between the arm 32b of the outer hub 32 and the frame 23c of the second disk plate 23.

The first sheets 6 and the second sheets 7 are arranged inside the openings 22e and 23e to support the torsion springs 5. For example, inside the opening 22e and the opening 23e, the two first sheets 6 are arranged such that they face each other and support one torsion spring 5. In the insides of another set of the opening 22e and the opening 23e, the two second sheets 7 are arranged such that they face each other and support another torsion spring 5.

The first sheet 6 includes a support 61 and a protrusion 62. The support 61 is supported by at least one of the frame 22c of the first disk plate 22 and the overhang 32d of the outer hub 32, and the frame 23c of the second disk plate 23 and the overhang 32d of the outer hub 32 in such a manner that the support 61 can swing. The support 61 supports the end of the torsion spring 5. The protrusion 62 protrudes from the support 61 and is inserted inside the torsion spring 5. The protrusion 62 limits the movement of the torsion spring 5 in the axial direction and the radial direction.

The second sheet 7 includes a support 71 and a protrusion 72. The support 71 is supported by at least one of the frame 22c of the first disk plate 22 and the overhang 32d of the outer hub 32, and the frame 23c of the second disk plate 23 and the overhang 32d of the outer hub 32 in such a manner that the support 71 can swing. The support 71 supports the end of the torsion spring 5. The protrusion 72 protrudes from the support 71 and is inserted inside the torsion spring 5. The protrusion 72 limits the movement of the torsion spring 5 in the axial direction and the radial direction. In the circumferential direction, the protrusion 72 of the second sheet 7 is shorter than the protrusion 62 of the first sheet 6.

The cushion 8 is disposed between the protrusions 72 of the two second sheets 7 facing each other in the circumferential direction. The cushion 8 is located inside the torsion spring 5 supported by the second sheets 7 and movable in the circumferential direction between the two protrusions 72. The cushion 8 can be elastically deformed in the circumferential direction.

As illustrated in FIG. 1, the damper device 1 further includes a plurality of friction members 11 and a plate spring 12. The friction member 11 can also be called a thrust member, for example. The friction members 11 and the plate spring 12 cause the damper device 1 to generate hysteresis.

The friction members 11 are interposed between the side plate 2 and the clutch hub 3 in the axial direction. The friction members 11, which are attached to the first disk plate 22 and the second disk plate 23, are in contact with the clutch hub 3 to generate friction force.

The plate spring 12 is interposed between the friction members 11 and the first disk plate 22 and between the friction members 11 and the second disk plate 23. The plate spring 12 pushes the friction members 11 toward the clutch hub 3. The plate spring 12 increases friction force generated between the friction members 11 and the clutch hub 3.

When torque acts on the damper device 1 described above, the side plate 2 and the clutch hub 3 relatively rotate around the axis Ax. When torque acts on the damper device 1, a twist angle occurs between the side plate 2 and the clutch hub 3.

When a twist angle occurs, the first sheet 6 and the second sheet 7 are each supported by one of the frame 22c of the side plate 2 and the arm 32b of the clutch hub 3, and the frame 23c of the side plate 2 and the arm 32b of the clutch hub 3, and apart from the other. In accordance with the twist angle, the first sheets 6 facing each other and the second sheets 7 facing each other approach each other. As a result, the first sheets 6 and the second sheets 7 compress the torsion springs 5.

As described above, the torsion springs 5 are elastically compressed by the rotation of the clutch hub 3 around the axis Ax with respect to the side plate 2. The compression of the torsion springs 5 attenuates rotational fluctuation of the engine.

Along with an increase in the twist angle the damper device 1 due to increased torque acting thereon, the protrusions 72 of the second sheets 7 abut the cushions 8. The protrusions 72 of the second sheets 7 compress the cushions 8. By the compressed cushions 8, the torsion springs 5 and the cushions 8 work to attenuate rotational fluctuation of the engine.

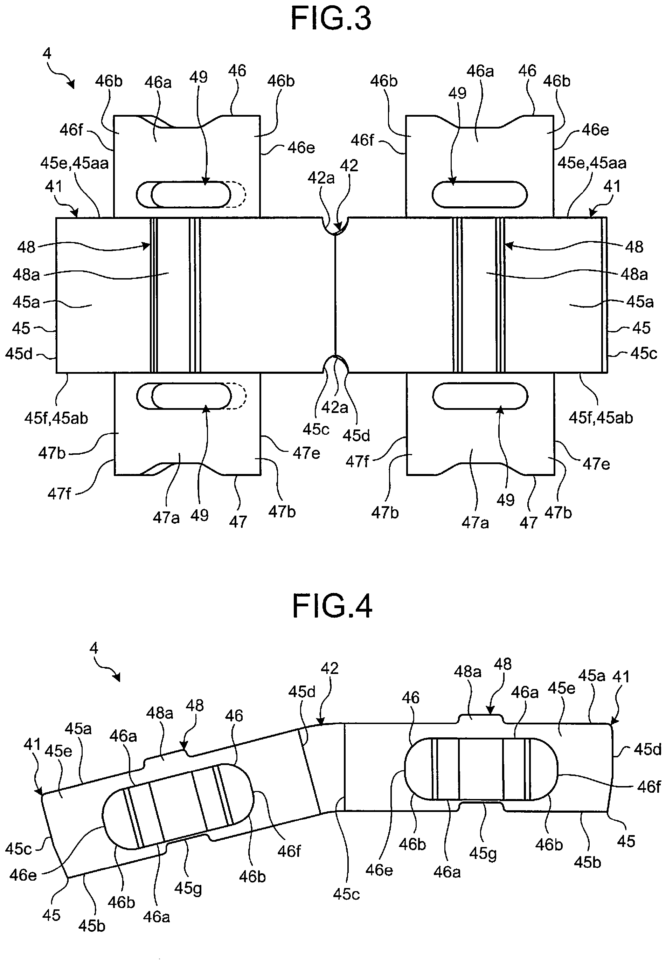

The following describes the coupling member 4 in the embodiment in detail. FIG. 3 is a plan view illustrating the coupling member 4 in the first embodiment. FIG. 4 is a front view illustrating the coupling member 4 in the first embodiment. FIGS. 3 and 4 each illustrate the coupling member 4 before being fixed to the first disk plate 22 and the second disk plate 23.

As illustrated in FIGS. 3 and 4, each of the multiple coupling members 4 includes two pins 41 and a connection 42. The two pins 41 have substantially the same shape. The connection 42 connects the two pins 41. The coupling member 4 may have three or more pins 41 and the connection 42 may connect the multiple pins 41. The coupling member 4 may have only the pin 41.

The two pins 41 and the connection 42 are integrally made of iron, for example. The pin 41 and the connection 42 may be made of other materials. The pins 41 and the connection 42 may be made separately.

Each pin 41 includes a restrictor 45, a first fixing member 46, a second fixing member 47, and a protrusion 48. The restrictor 45 can also be called an intervenor, a body, or a spacer, for example. The first fixing member 46 and the second fixing member 47 can also be called deformable part or rivet, for example.

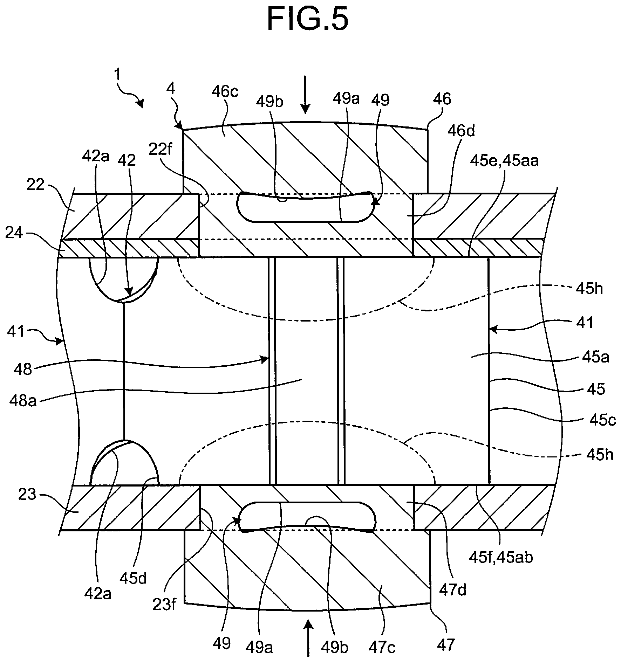

FIG. 5 is a cross-sectional view partially illustrating the first disk plate 22, the second disk plate 23, and the coupling member 4 in the first embodiment. As illustrated in FIG. 5, the restrictor 45 is located between the first disk plate 22 and the second disk plate 23 in the axial direction. As illustrated in FIG. 5, the restrictor 45 is located between the supporting plate 24 attached to the first disk plate 22 and the second disk plate 23.

As illustrated in FIGS. 3 and 4, the restrictor 45 has a substantially rectangular parallel piped shape. The restrictor 45 may has another shape such as a cylindrical shape, for example. The restrictor 45 has a first surface 45a, a second surface 45b, a first side surface 45c, a second side surface 45d, a first end surface 45e, and a second end surface 45f. The first surface 45a is an example of a circumference. The first surface 45a, the second surface 45b, the first side surface 45c, the second side surface 45d, the first end surface 45e, and the second end surface 45f are each formed substantially flat. They may have a curved surface or have unevenness.

Each of the first surface 45a and the second surface 45b is wider than each of the first side surface 45c, the second side surface 45d, the first end surface 45e, and the second end surface 45f. The first surface 45a faces radially outward. Radially outward is the direction intersecting the axial direction. In other words, the first surface 45a is provided on a far side of the axis Ax. The second surface 45b is located opposite the first surface 45a and faces radially inward. In other words, the second surface 45b is provided on a near side of the axis Ax.

The first side surface 45c and the second side surface 45d substantially face the circumferential direction. The second side surface 45d is located opposite the first side surface 45c. The first side surface 45c of one pin 41 and the second side surface 45d of the other pin 41 are connected by the connection 42.

As illustrated in FIG. 5, the first end surface 45e and the second end surface 45f face the axial direction. The first end surface 45e is in contact with the first disk plate 22 or the supporting plate 24 attached to the first disk plate 22. The second end surface 45f is located opposite the first end surface 45e and in contact with the second disk plate 23.

As a result of the contact between the first end surface 45e and the first disk plate 22 or the supporting plate 24 attached to the first disk plate 22, and the contact between the second end surface 45f and the second disk plate 23, the restrictor 45 restricts the first disk plate 22 and the supporting plate 23 from approaching each other. In the axial direction, the length of the restrictor 45 is larger than the thickness of the arm 32b of the clutch hub 3. The restrictor 45, thus, prevents the first disk plate 22 and the second disk plate 23 from being in contact with the clutch hub 3.

As illustrated in FIGS. 3 and 4, the first fixing member 46 protrudes in the axial direction from the first end surface 45e of the restrictor 45. The first fixing member 46 extends in the axial direction and has a substantially oval cylindrical shape. The first fixing member 46 may have other shapes.

The first fixing member 46 has two flat surfaces 46a and two curved surfaces 46b. The two flat surfaces 46a face in the radial direction. One flat surface 46a faces radially outward while the other flat surface 46a faces the inside in the radial direction. The two curved surfaces 46b face substantially the circumferential direction.

As illustrated in FIG. 5, the first fixing member 46 is inserted into a first hole 22f provided to the first disk plate 22. The outer frame 22b is provided with the first hole 22f having substantially the same oval shape as the first fixing member 46, for example. The first fixing member 46 can also be inserted into a hole provided to the supporting plate 24.

The first fixing member 46 is fixed to the first disk plate 22 by caulking, for example. By the caulking, a part outside the first hole 22f of the first fixing member 46 is deformed.

Hereinafter, the part of the first fixing member 46 outside the first hole 22f is called an outer part 46c. A part of the first fixing member 46 inside the first hole 22f and the hole of the supporting plate 24is called an inner part 46d.

The outer part 46c is deformed into a substantially oval plate-like shape, for example. The outer part 46c may have other shapes. The shape of the inner part 46d is mostly maintained in substantially the same shape as the first hole 22f. When viewed from the axial direction, the outer part 46c is larger than the inner part 46d.

As described above, the first fixing member 46 includes the outer part 46c formed by caulking and the inner part 46d. The inner part 46d protrudes from the restrictor 45 and is housed in the first hole 22f. The inner part 46d is fitted in the first hole 22f of the first disk plate 22, thereby limiting the movement of the first disk plate 22 in the radial direction and the circumferential direction with respect to the second disk plate 23.

The outer part 46c expands from the end of the inner part 46d in a direction intersecting the axial direction. The outer part 46c, thus, restricts the first disk plate 22 from moving away from the restrictor 45 and the second disk plate 23 in the axial direction.

The first disk plate 22 is disposed between the outer part 46c of the first fixing member 46 and the restrictor 45. The restrictor 45 and the first fixing member 46, thus, limit the movement of the first disk plate 22 in the axial direction with respect to the second disk plate 23.

As illustrated in FIG. 3, the second fixing member 47 protrudes in the axial direction from the second end surface 45f of the restrictor 45. The second fixing member 47 is located opposite the first fixing member 46 and protrudes in the direction opposite the protruding direction of the first fixing member 46. The second fixing member 47 extends in the axial direction and has a substantially oval cylindrical shape. The second fixing member 47 may have other shapes.

The second fixing member 47 has two flat surfaces 47a and two curved surfaces 47b. The two flat surfaces 47a face the radial direction. One flat surface 47a faces radially outward while the other flat surface 47a faces the inside in the radial direction. The two curved surfaces 47b face substantially the circumferential direction.

As illustrated in FIG. 5, the second fixing member 47 is inserted into a second hole 23f of the second disk plate 23. The outer frame 23b is provided with the second hole 23f of substantially the same oval shape as the second fixing member 47, for example.

The second fixing member 47 is fixed to the second disk plate 23 by caulking, for example. By the caulking, a part outside the second hole 23f of the second fixing member 47 is deformed.

Hereinafter, a part outside the second hole 23f of the second fixing member 47 is called an outer part 47c. A part in the second hole 23f of the second fixing member 47 is called an inner part 47d.

The outer part 47c is deformed in a substantially oval plate-like shape, for example. The outer part 47c may have other shapes. The shape of the inner part 47d is mostly maintained in substantially the same shape as the second hole 23f. When viewed from the axial direction, the outer part 47c is larger than the inner part 47d.

As described above, the second fixing member 47 includes the outer part 47c formed by the caulking and the inner part 47d. The inner part 47d protrudes from the restrictor 45 and is housed in the second hole 23f. The inner part 47d is fitted in the second hole 23f of the second disk plate 23, thereby limiting the movement of the second disk plate 23 in the circumferential direction with respect to the first disk plate 22.

The outer part 47c spreads in the direction intersecting the axial direction from the end of the inner part 47d. The outer part 47c, thus, limits the separation of the second disk plate 23 from the restrictor 45 and the first disk plate 22 in the axial direction.

The second disk plate 23 is disposed between the outer part 47c of the second fixing member 47 and the restrictor 45. The restrictor 45 and the second fixing member 47, thus, limit the movement of the second disk plate 23 in the axial direction with respect to the first disk plate 22.

As illustrated in FIG. 3, the protrusion 48 includes a first extension 48a. The first extension 48a is an example of a first protrusion. The first extension 48a protrudes from the first surface 45a of the restrictor 45 in a direction substantially perpendicular to the first surface 45a. In other words, the first extension 48a protrudes radially outward from the first surface 45a. The direction substantially perpendicular to the first surface 45a and the radially outward direction intersect the axial direction. The directions are the examples of a first direction. The height of the protruding first extension 48a is 0.2 to 0.8 times of the thickness of the restrictor 45.

In the first embodiment, the first extension 48a extends in the axial direction from one edge 45aa to the other edge 45ab of the first surface 45a. The axial length of the first extension 48a is longer than the length (width) of the first extension 48a in the width direction of the first surface 45a. The width direction of the first surface 45a is along the first surface 45a and perpendicular to the axial direction and the protruding direction of the first extension 48a. The width direction of the first surface 45a is an example of a second direction. The first extension 48a is not limited to the example. For example, the axial length of the first extension 48a may be shorter than the length of the first extension 48a in the width direction of the first surface 45a. For another example, the axial length of the first extension 48a may be equal to the length of the first extension 48a in the width direction of the first surface 45a.

The protrusion 48 is formed by half-blanking (stamping), for example. As illustrated in FIG. 4, the second surface 45b of the restrictor 45 is, thus, provided with a recess 45g. The recess 48g has the same size as the protrusion 48. The recess 45g is located opposite the first extension 48a and extends in the extending direction of the first extension 48a. The protrusion 48 may be formed by another method that forms the recess 45g or another method that does not form the recess 45g.

As illustrated in FIG. 3, the length (width) of the first extension 48a in the width direction of the first surface 45a is shorter than the length (width) of the first fixing member 46 in the width direction of the first surface 45a. The length (width) of the first extension 48a in the width direction of the first surface 45a is shorter than the length (width) of the second fixing member 47 in the width direction of the first surface 45a.

In the width direction of the first surface 45a, the first extension 48a is located between both ends 46e and 46f of the first fixing member 46. In the width direction of the first surface 45a, the first extension 48a is located between both ends 47e and 47f of the second fixing member 47. In the width direction of the first surface 45a, the first extension 48a may be located at a position offset from the first fixing member 46.

The first fixing member 46 and the second fixing member 47 are each provided with an opening 49. The opening 49 can also be called a hole, a through hole, a fragile portion, or an easily deformable portion, for example. The first fixing member 46 and the second fixing member 47 may be each provided with a plurality of openings 49.

The opening 49 of the first fixing member 46 extends in the direction perpendicular to the flat surface 46a and opens to the two flat surfaces 46a, for example. In other words, the opening 49 passes through the first fixing member 46 in the direction perpendicular to the flat surface 46a. The direction perpendicular to the flat surface 46a intersects the axial direction. The opening 49 may extend in another direction intersecting the axial direction.

The opening 49 of the second fixing member 47 extends in the direction perpendicular to the flat surface 47a and opens on the two flat surfaces 47a, for example. In other words, the opening 49 passes through the second fixing member 47 in the direction perpendicular to the flat surface 47a. The opening 49 may extend in another direction intersecting the axial direction.

As illustrated in FIG. 5, a part of the opening 49 is located in the outer part 46c in the first fixing member 46. In other words, a part of the opening 49 is located outside the first hole 22f. The inner part 46d is provided with the other part of the opening 49. In other words, the other part of the opening 49 is located inside the first hole 22f. The opening 49 is located across both of the outer part 46c and the inner part 46d.

In the second fixing member 47, a part of the opening 49 is provided to the outer part 47c. In other words, a part of the opening 49 is located outside the second hole 23f. The other part of the opening 49 is provided to the inner part 47d. In other words, the other part of the opening 49 is located in the second hole 23f. The opening 49 is provided over both of the outer part 47c and the inner part 47d.

As illustrated in FIG. 4, the connection 42 connects the two pins 41 such that a direction the first surface 45a of one pin 41 faces and a direction the first surface 45a of the other pin 41 faces differ from each other. For example, the coupling member 4 is bent at the connection 42, thereby forming the connection 42 that arranges the two pins 41 in the way described above.

As illustrated in FIG. 3, the connection 42 is provided with two dents 42a. The dents 42a are provided at both ends of the connection 42 in the axial direction. The dent 42a provided at the end on the first disk plate 22 side is dented in a direction far from the first disk plate 22. The dent 42a provided at the end on the second disk plate 23 side is dented in a direction far from the second disk plate 23. The dents 42a provided thus described prevent a part of the connection 42 from protruding in the axial direction when the connection 42 is bent.

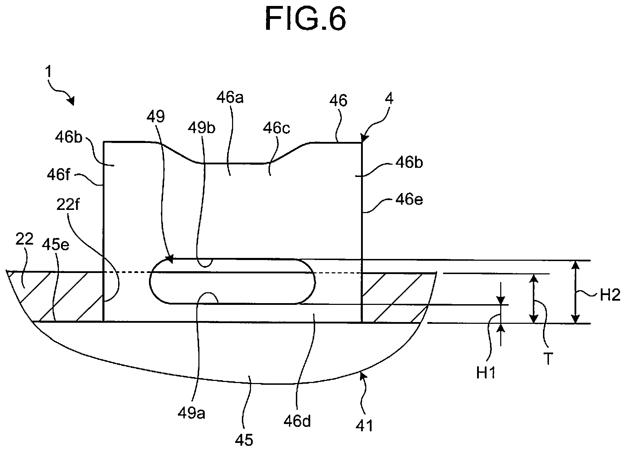

FIG. 6 is a plan view illustrating the coupling member 4 and the first disk plate 22 in the first embodiment before caulking. As illustrated in FIG. 6, a distance H1 between the restrictor 45 and an inner end 49a of the opening 49 is smaller than a thickness T of the first disk plate 22 (and the supporting plate 24) in the axial direction. The inner end 49a is the edge defining the opening 49 and is nearest to the restrictor 45 before caulking. Before caulking, the inner end 49a is located in the first hole 22f.

Before caulking, a distance H2 between the restrictor 45 and an outer end 49b of the opening 49 is larger than the thickness T. The outer end 49b is the edge forming the opening 49 and is the farthest from the restrictor 45 before caulking. Before caulking, the outer end 49b is located outside the first hole 22f.

When the first fixing member 46 is riveted, the first fixing member 46 is compressed in the axial direction toward the restrictor 45. As a result, the outer part 46c of the first fixing member 46 is crushed, thereby spreading in a direction intersecting the axial direction. In addition, a part of the first fixing member 46 is deformed and flows such that the outer end 49b approaches the inner end 49a.

As illustrated in FIG. 5, a part of the first fixing member 46 flowing flows in the first hole 22f. As a result, the outer end 49b is also disposed in the first hole 22f. The deformation of the first fixing member 46 is not limited to that described above. The first fixing member 46 may be deformed such that the outer end 49b is located outside the first hole 22f after caulking.

The first fixing member 46 is deformed such that the outer end 49b approaches the inner end 49a, resulting in shrinking the opening 49. In the embodiment, the two edges of the opening 49 may contact each other, completely closing the opening 49. However, the opening 49 with the contacting edges is still defined as the opening 49.

The first fixing member 46 is deformed by caulking as described above. In the same manner as the first fixing member 46, the second fixing member 47 is deformed by caulking. The deformation of the first fixing member 46 and the deformation of the second fixing member 47 may differ from each other.

In the damper device 1 according to the first embodiment described above, the coupling member 4 couples the first disk plate 22 and the second disk plate 23 and includes the first extension 48a protruding from the restrictor 45. The axial length of the first extension 48a is longer than the length of the first extension 48a in the width direction of the first surface 45a. The first extension 48a thus extends in the axial direction as a whole. As a result, a cross-sectional secondary moment is increased, thereby improving the axial stiffness of the restrictor 45 and preventing undesired deformation of the restrictor 45, such as buckling, for example.

The first extension 48a extends from one edge 45aa to the other edge 45ab of the first surface 45a in the axial direction. This prevents occurrence of stress concentration at the boundary between the first extension 48a and the first surface 45a. Thus, the stress can be easily released, thereby increasing the strength of the restrictor 45 and preventing undesired deformation of the restrictor 45, such as buckling, for example.

The recess 45g in the coupling member 4 is located opposite the first extension 48a and extends in the extending direction of the first extension 48a. For example, to form the first extension 48a and the recess 45g as described in the first embodiment, the second surface 45b to be provided with the recess 45g may be pressed by half-blanking (stamping). The half-blanked part of the coupling member 4 improves in stiffness due to work-hardening. This results in enhancing the stiffness of the restrictor 45 and preventing undesired deformation of the restrictor 45 such as buckling, upon receipt of the pressure from caulking the first and second fixing members 46 and 47 to the first disk plate 22 and the second disk plate 23 for fixation, for example.

In the width direction of the first surface 45a, the first extension 48a is located between both ends 46e and 46f of the first fixing member 46. This increases the stiffness of the part of the first and second fixing members 46 and 47 and the part of the first disk plate 22 and the second fixing member 47, the parts receiving the pressure from caulking them for fixation, for example, and prevents undesired deformation of the restrictor 45.

Specifically, in caulking the first fixing member 46, load acts on both the first fixing member 46 and the restrictor 45 via the first fixing member 46. For example, stronger load acts on a portion 45h of the restrictor 45 close to the first fixing member 46 as illustrated in FIG. 5. Located between both ends 46e and 46f of the first fixing member 46 in the width direction of the first surface 45a, the first extension 48a serves to increase the stiffness of the portion 45h.

The first fixing member 46 of the coupling member 4 is provided with the opening 49 extending in the radial direction intersecting the axial direction. The first fixing member 46 is inserted into the first hole 22f of the first disk plate 22 to be fixed to the first disk plate 22. At least a part of the opening 49 is located outside the first hole 22f. The periphery of such an opening 49, of the first fixing member 46, located outside the first hole 22f, is easily deformable. As a result, the first fixing member 46 is prevented from deforming at the time of fixing the first fixing member 46 to the first disk plate 22 by a method such as caulking that causes the deformation of the outer part 46c of the first fixing member 46. This prevents an increase in load acting on the first fixing member 46 accordingly. Consequently, the coupling member 4 is prevented from undesirably deforming such as buckling due to the load, and the first disk plate 22 is prevented from deforming.

The first fixing member 46 includes the outer part 46c that expands in a direction intersecting the axial direction from the end of the inner part 46d housed in the first hole 22f. The outer part 46c is provided with at least a part of the opening 49. The outer part 46c is formed by being crushed by a method such as caulking, for example. The opening 49 located in the part deformed by a method such as caulking thus works to prevent an increase in load acting on the first fixing member 46 along with the deformation of the first fixing member 46, thereby preventing the restrictor 45 from undesirably deforming such as buckling due to the load.

A part of the opening 49 is located in the first hole 22f. The opening 49 is located across both of the inside and outside of the first hole 22f around the opening end of the first hole 22f. This allows the periphery of the opening end of the first hole 22f of the first fixing member 46 to be easily deformable, thereby ensuring the contact between the deformed part (the outer part 46c) and the outer surface of the first disk plate 22. The deformed part of the first fixing member 46, thus, can be more firmly fixed to the first disk plate 22 while restricting the the first disk plate 22 from separating from the restrictor 45. In addition, the first fixing member 46 is deformed to be partially fitted into the first hole 22f, thereby increasing the fastening force and strength of the riveted part of the first fixing member 46 and the first disk plate 22.

The opening 49 passes through the first fixing member 46. Thereby, the periphery of the opening 49 of the first fixing member 46 becomes more deformable. As a result, at the time of fixing the first fixing member 46 to the first disk plate 22 by a method such as caulking, an increase in load acting on the first fixing member 46 as the first fixing member 46 deforms is prevented. Consequently, the restrictor 45 is prevented from undesirably deforming such as buckling due to the load.

The first extension 48a protrudes radially outward. This prevents the first extension 48a from interfering with another member such as the arm 32b of the clutch hub 3. Additionally, this can improves the strength of the restrictor 45 against radially outward bending force and prevent the restrictor 45 from being bent radially outward.

The recess 45g is located in the second surface 45b facing radially inward. This generates force canceling the radially outward bending force to the restrictor 45, thereby preventing the restrictor 45 from being bent radially outward.

### Second embodiment

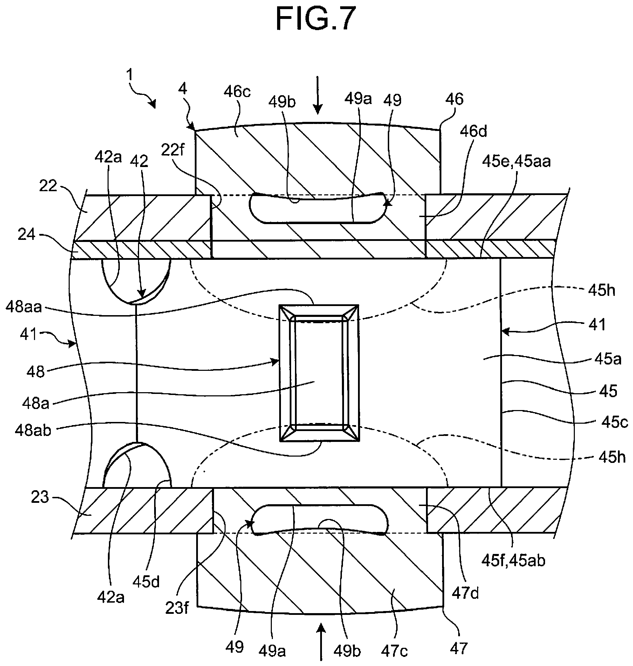

The following describes a second embodiment with reference to FIG. 7. In the following descriptions of multiple embodiments, the constituting elements having the same functions as the constituting elements having been described are labeled with the same numerals as the constituting elements having been described, and further descriptions thereof are omitted in some cases. All of the functions and the characteristics of the multiple constituting elements labeled with the same numerals are not always in common with one another. The multiple constituting elements labeled with the same numerals may have different functions and characteristics according to the respective embodiments.

FIG. 7 is a cross-sectional view partially illustrating the first disk plate 22, the second disk plate 23, and the coupling member 4 according to a second embodiment. As illustrated in FIG. 7, the first extension 48a in the second embodiment has a first end 48aa and a second end 48ab.

The first end 48aa and the second end 48ab are the ends of the first extension 48a in the axial direction. The first end 48aa faces the first disk plate 22. The second end 48ab faces the second disk plate 23.

The first end 48aa is apart from one edge 45aa of the first surface 45a in the axial direction. The second end 48ab is apart from the other edge 45ab of the first surface 45a in the axial direction.

In the damper device 1 in the second embodiment described above, the first extension 48a has the first end 48aa apart from the axial edge 45aa of the first surface 45a and the second end 48ab apart from the other axial edge 45ab of the first surface 45a. This prevents the deformation of the first end surface 45e and the second end surface 45f of the restrictor 45 in forming the first extension 48a by half-blanking, for example, thereby preventing insufficient contact between the first end surface 45e and the first disk plate 22 and between the second end surface 45f and the second disk plate 23.

### Third embodiment

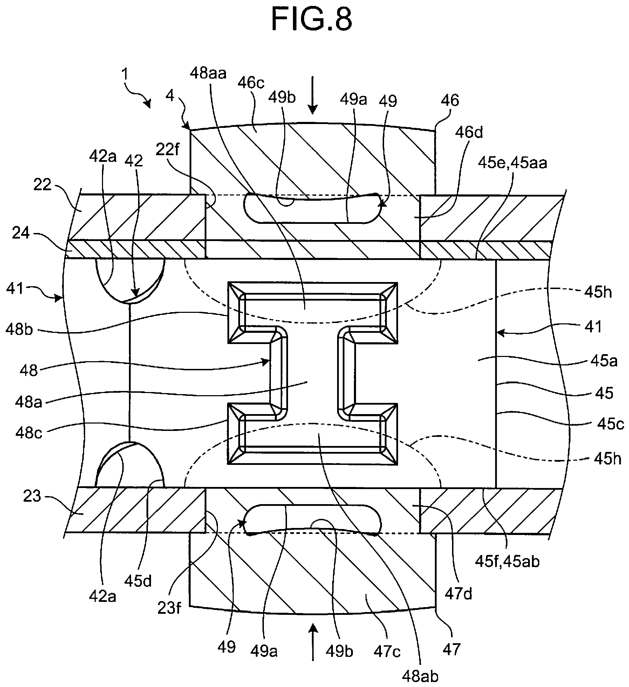

The following describes a third embodiment with reference to FIG. 8. FIG. 8 is a cross-sectional view partially illustrating the first disk plate 22, the second disk plate 23, and the coupling member 4 in the third embodiment.

As illustrated in FIG. 8, the protrusion 48 in the third embodiment includes a second extension 48b and a third extension 48c. The second extension 48b is an example of a second protrusion. The second extension 48b and the third extension 48c protrude from the first surface 45a of the restrictor 45 in a direction substantially perpendicular to the first surface 45a.

The second extension 48b extends in the width direction of the first surface 45a from the first end 48aa of the first extension 48a. The width direction of the first surface 45a intersects the axial direction and a direction substantially perpendicular to the first surface 45a. The second extension 48b may extend in another direction. As illustrated in FIG. 8, the length of the second extension 48b in the width direction of the first surface 45a is shorter than the length (width) of the first fixing member 46 in the width direction of the first surface 45a, and shorter than the length (width) of the second fixing member 47 in the width direction of the first surface 45a. The length of the second extension 48b is not limited to this example.

The third extension 48c extends in the width direction of the first surface 45a from the second end 48ab of the first extension 48a. The extending direction of the third extension 48c and the extending direction of the second extension 48b may differ from each other. As illustrated in FIG. 8, the length of the third extension 48c in the width direction of the first surface 45a is shorter than the length (width) of the first fixing member 46 in the width direction of the first surface 45a, and shorter than the length (width) of the second fixing member 47 in the width direction of the first surface 45a. The length of the third extension 48c is not limited to this example. The second extension 48b and the third extension 48c are integrated with the first extension 48a.

The second extension 48b is apart from one edge 45aa of the first surface 45a. The third extension 48c is apart from the other edge 45ab of the first surface 45a. The second extension 48b may be in contact with the edge 45aa of the first surface 45a while the third extension 48c may be in contact with the edge 45ab of the first surface 45a.

In the damper device 1 in the third embodiment described above, the second extension 48b of the coupling member 4 extends from the first end 48aa of the first extension 48a in the direction intersecting the axial direction and the protruding direction of the first extension 48a. This increases stiffness of the part of the first fixing member 46 and the second fixing member 47 and the part of the first disk plate 22 the second disk plate 23, the parts receiving the pressure from caulking them for fixation, for example. As a result, the restrictor 45 is prevented from undesirably deforming, such as buckling.

Specifically, the second extensions 48b and 48c are located in the portion 45h of the restrictor 45 close to the first fixing member 46 and the second fixing member 47. The second extension 48b and the third extension 48c are both located in the portion 45h which receives stronger load from caulking of the first fixing member 46. That is, the portion 45h improves in stiffness.

### Fourth embodiment

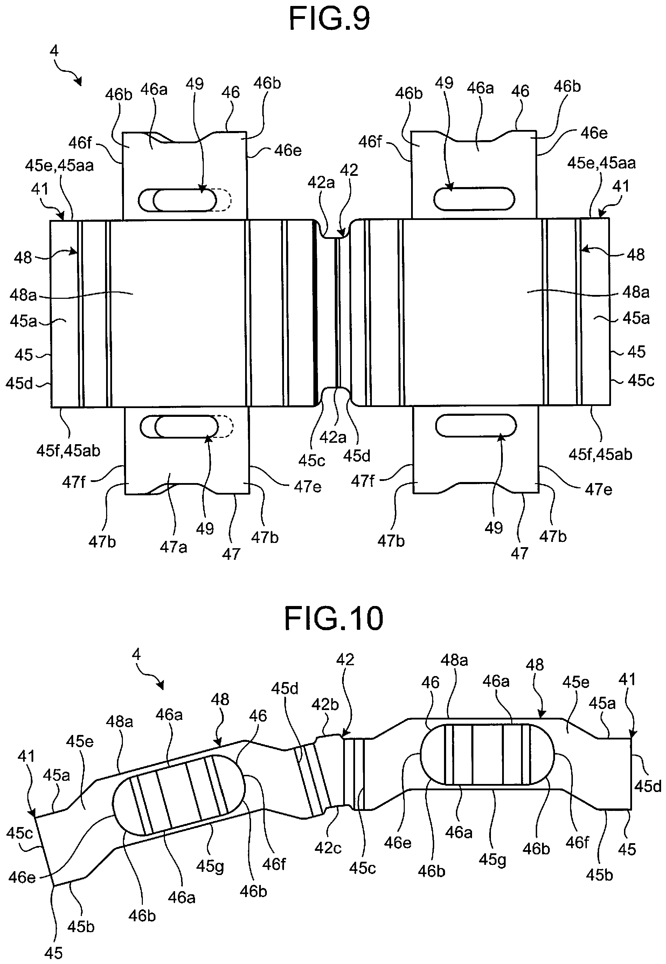

The following describes a fourth embodiment with reference to FIGS. 9 and 10. FIG. 9 is a plan view illustrating the coupling member 4 according to the fourth embodiment. FIG. 10 is a front view illustrating the coupling member 4 according to the fourth embodiment. FIGS. 9 and 10 each illustrate the coupling member 4 before being fixed to the first disk plate 22 and the second disk plate 23.

As illustrated in FIGS. 9 and 10, the restrictor 45 in the fourth embodiment is bent such that the restrictor 45 protrudes radially outward. As a result, the restrictor 45 is provided with the protrusion 48 and the recess 45g. The restrictor 45 may be bent such that the restrictor 45 protrudes radially inward.

In the width direction of the first surface 45a, the first extension 48a in the fourth embodiment is provided from the inside to the outside of the end 46e and from the inside to the outside of the end 46f, the ends 46e and 46f being both ends of the first fixing member 46 in the width direction of the first surface 45a. In other words, the first extension 48a is larger than the first fixing member 46 in the width direction of the first surface 45a. In the width direction of the first surface 45a, the first extension 48a is provided from the inside to the outside of the end 47e and from the inside to the outside of the end 47f, the ends 47e and 47f being both ends of the second fixing member 47 in the width direction of the first surface 45a.

Likewise, in the width direction of the first surface 45a, the recess 45g in the fourth embodiment is provided from the inside to the outside of the end 46e and from the inside to the outside of the end 46f, the ends 46e and 46f being both ends of the first fixing member 46 in the width direction of the first surface 45a. In other words, in the width direction of the first surface 45a, the recess 45g is larger than the first fixing member 46. In the width direction of the first surface 45a, the recess 45g is provided from the inside to the outside of the end 47e and from the inside to the outside of the end 47f, the ends 47e and 47f being both ends of the second fixing member 47 in the width direction of the first surface 45a.

As illustrated in FIG. 10, in the fourth embodiment, the connection 42 is provided with a protrusion 42b and a recess 42c. The protrusion 42b protrudes radially outward. The recess 42c is dented radially outward. The protrusion 42b and the recess 42c are formed by half-blanking, for example. As a result, the stiffness of the restrictor 45 is increased by work-hardening.

In the damper device 1 in the fourth embodiment described above, in the width direction of the first surface 45a, the first extension 48a of the fourth embodiment extends from the inside to the outside of both ends 46e and 46f of the first fixing member 46. This prevents the deformation of the first fixing member 46 and the second fixing member 47 at the time of forming the protrusion 48.

### Fifth embodiment

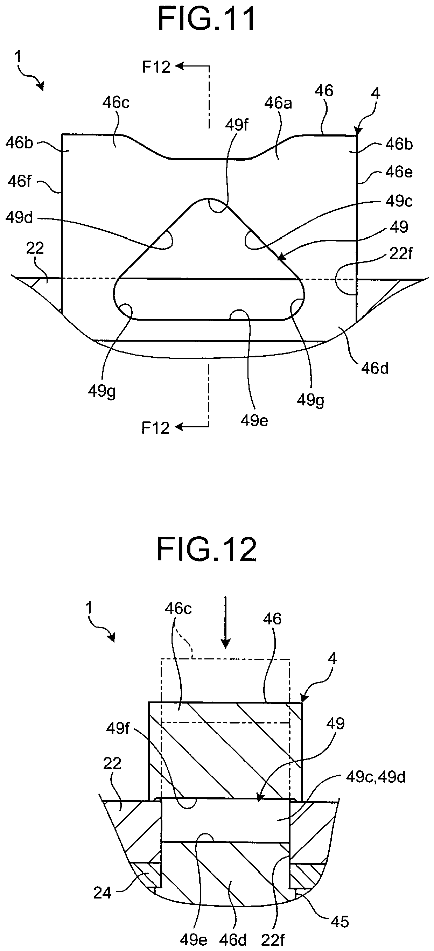

The following describes a fifth embodiment with reference to FIGS. 11 and 12. In the following embodiments, the first fixing member 46 is mainly explained. Unless otherwise described, the second fixing member 47 has the same shape as the first fixing member 46 and is deformed in the same manner as the first fixing member 46. The second fixing member 47 may have a shape different from that of the first fixing member 46. The second fixing member 47 may be deformed in a manner different from that of the first fixing member 46.

FIG. 11 is a cross-sectional view partially illustrating the first disk plate 22 and the coupling member 4 according to the fifth embodiment. FIG. 11 illustrates the coupling member 4 before being fixed to the first disk plate 22 and the second disk plate 23.

As illustrated in FIG. 11, the opening 49 in the fifth embodiment has a substantially triangle shape. The opening 49 has a first edge 49c, a second edge 49d, a third edge 49e, a first connection 49f, and two second connections 49g.

The first edge 49c to the third edge 49e extend in different directions from one another, and have a substantially linear shape. The first edge 49c to the third edge 49e are not limited to a linear shape, and may have other shapes.

The first edge 49c and the second edge 49d extend across both of the outer part 46c and the inner part 46d of the first fixing member 46. In other words, a part of the first edge 49c is located inside the first hole 22f. A part of the second edge 49d is also located inside the first hole 22f. The third edge 49e is of the inner part 46d of the first fixing member 46 and located in the first hole 22f.

At the first connection 49f, the first edge 49c and the second edge 49d are connected. The first edge 49c and the second edge 49d extend closer to each other as they approach the first connection 49f in the axial direction.

The first connection 49f is provided to the outer part 46c of the first fixing member 46 and located outside the first hole 22f. The first connection 49f is located further from the first disk plate 22 than the first edge 49c and the second edge 49d.

At one second connection 49g, the first edge 49c and the third edge 49e are connected. At the other second connection 49g, the second edge 49d and the third edge 49e are connected.

FIG. 12 is a cross-sectional view along line F12-F12 in FIG. 11 and partially illustrates the first disk plate 22 and the coupling member 4 in the fifth embodiment. FIG. 12 illustrates the outer part 46c of the first fixing member 46 before caulking with the two-dot chain line and the outer part 46c after caulking with the solid line.

When the first fixing member 46 is riveted, the first fixing member 46 is compressed in the axial direction toward the restrictor 45. As a result, the outer part 46c of the first fixing member 46 is crushed, thereby spreading in a direction intersecting the axial direction. In addition, a part of the first fixing member 46 is deformed and flows such that the first connection 49f approaches the third edge 49e. At the time, force compressing the first fixing member 46 includes a component that faces the left-right direction in FIG. 12 (direction along the outer surface of the first disk plate 22) in some cases.

As illustrated in FIG. 11, before caulking the opening 49 in the outer part 46c of the first fixing member 46 is not parallel to the outer surface of the first disk plate 22. That is, abutment between the parallel part of the opening 49 and the outer surface of the first disk plate 22 will not occur so that the deformation of the first fixing member 46 is not prevented or the first disk plate 22 is prevented from deforming by compression force.

The first edge 49c and the second edge 49d extend closer to each other as they approach the first connection 49f in the axial direction. This allows the first fixing member 46 to be deformable along the first hole 22f. The outer part 46c of the first fixing member 46 is, thus, prevented from being eccentrically deformed laterally in FIG. 12.

In the damper device 1 in the fifth embodiment described above, in deforming the first fixing member 46 with the opening 49 by caulking, the first connection 49f of the first fixing member 46 is deformed, approaching the first disk plate 22, for example. The first edge 49c and the second edge 49d of the opening 49 are not in parallel with the outer surface of the first disk plate 22, and extend closer to each other as they approach the first connection 49f. This allows the first fixing member 46 to be easily deformable along the first hole 22f, thereby preventing the occurrence of undesired deformation of the first fixing member 46.

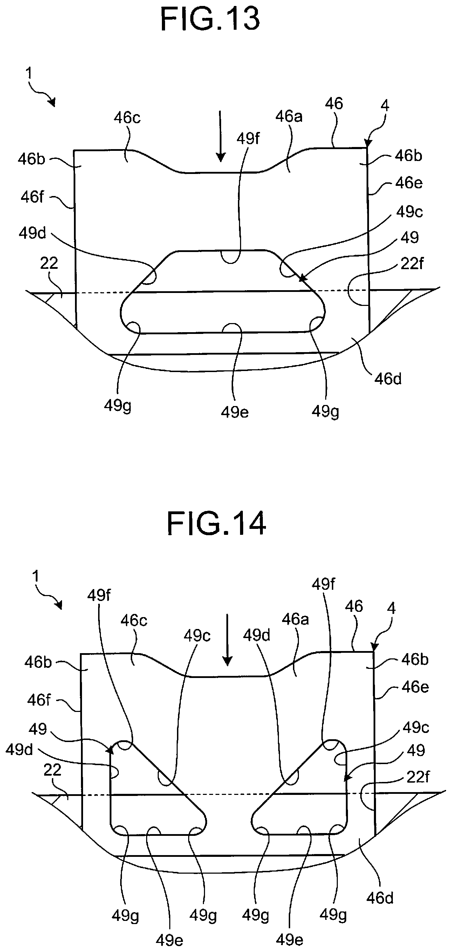

FIG. 13 is a cross-sectional view partially illustrating the first disk plate 22 and the coupling member 4 according to a first modification of the fifth embodiment. FIG. 14 is a cross-sectional view partially illustrating the first disk plate 22 and the coupling member 4 according to a second modification of the fifth embodiment. FIGS. 13 and 14 each illustrate the coupling member 4 before being fixed to the first disk plate 22 and the second disk plate 23.

As illustrated in FIG. 13, the opening 49 has a substantially trapezoidal shape. In this case, the first connection 49f is the edge of the opening 49 extending in the width direction of the first surface 45a. Even in this case, the first edge 49c and the second edge 49d extend closer to each other as they approach the first connection 49f in the axial direction, thereby allowing the first fixing member 46 to be easily deformable along the first hole 22f. The outer part 46c of the first fixing member 46 is, thus, prevented from being eccentrically deformed laterally in FIG. 12.

As illustrated in FIG. 14, the first fixing member 46 may be provided with a plurality of openings 49. In this case, the first fixing member 46 is easily deformable along the first hole 22f in the same manner as in the fifth embodiment, thereby preventing occurrence of undesired deformation of the first fixing member 46.

### Sixth embodiment

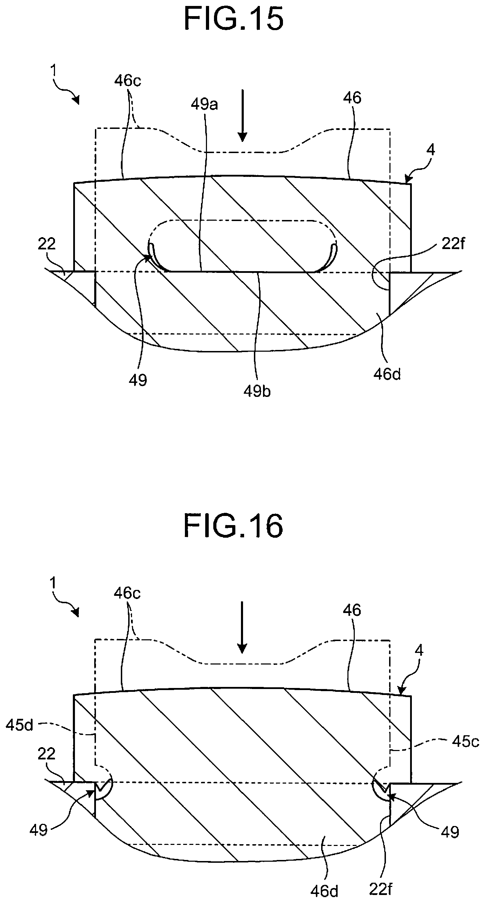

The following describes a sixth embodiment with reference to FIG. 15. FIG. 15 is a cross-sectional view partially illustrating the first disk plate 22 and the coupling member 4 according to the sixth embodiment. FIG. 15 illustrates the outer part 46c of the first fixing member 46 before caulking with the two-dot chain line and the outer part 46c after caulking with the solid line.

As illustrated in FIG. 15, the opening 49 in the sixth embodiment is located outside the first hole 22f. The inner end 49a of the opening 49 is disposed at substantially the same position as the opening end of the first hole 22f.

The opening 49 in the sixth embodiment also allows the periphery of the opening 49 of the first fixing member 46, the periphery being located outside the first hole 22f, to be easily deformable. This prevents an increase in load acting on the first fixing member 46 as the first fixing member 46 deforms when the first fixing member 46 is fixed to the first disk plate 22 by a method such as caulking that causes deformation of the outer part 46c of the first fixing member 46. As a result, occurrence of undesired deformation of the restrictor 45 due to the load is prevented.

### Seventh embodiment

The following describes a seventh embodiment with reference to FIG. 16. FIG. 16 is a cross-sectional view partially illustrating the first disk plate 22 and the coupling member 4 according to the seventh embodiment. FIG. 16 illustrates the outer part 46c of the first fixing member 46 before caulking with the two-dot chain line and the outer part 46c after caulking with the solid line.

As illustrated in FIG. 16, in the seventh embodiment, the first fixing member 46 is provided with a plurality of openings 49. The opening 49 in the seventh embodiment is a hole having the bottom (recess). The openings 49 open on the first side surface 45c and the second side surface 45d, for example, and extend in the width direction of the first surface 45a. A part of the opening 49 is outside the first hole 22f and the other part of the opening 49 is in the first hole 22f.

The openings 49 in the seventh embodiment described above also allow the peripheries of the openings 49 of the first fixing member 46, the peripheries being located outside the first hole 22f, to be easily deformable. This prevents an increase in load acting on the first fixing member 46 as the first fixing member 46 deforms, in the case of fixing the first fixing member 46 to the first disk plate 22 by a method such as caulking that causes deformation of the outer part 46c of the first fixing member 46. As a result, occurrence of undesired deformation of the restrictor 45 due to the load is prevented.

The embodiments of the invention are exemplified as described above. The embodiments and modifications described above are only examples and not intended to limit the scope of the invention. The embodiments and the modifications can be implemented by other various forms, and can be omitted, replaced, or modified in various ways without departing from the scope of the invention. The structures and shapes of the respective embodiments and modifications can also be implemented by partially replacing them.

## Claims

1. A damper device, comprising:
a first rotational element configured to be rotatable around a rotation center;
a second rotational element comprising:
a first member, and
a second member being spaced apart from the first member in an axial direction of the rotation center and being rotatable around the rotation center together with the first member;
an elastic element that is located between the first rotational element and the second rotational element and elastically compressed by rotation of the first rotational element around the rotation center with respect to the second rotational element; and
a coupling member that couples the first member and the second member, the coupling member comprising:
a restrictor located between the first member and the second member, the restrictor that restricts the first member and the second member from mutually approaching,
a first fixing member that protrudes in the axial direction of the rotation center from the restrictor, is inserted into a first hole in the first member, and is fixed to the first member,
a second fixing member that protrudes in the axial direction of the rotation center from the restrictor, is inserted into a second hole in the second member, and is fixed to the second member, and
a first protrusion that protrudes in a first direction from the restrictor, the first direction intersecting the axial direction of the rotation center.

2. The damper device according to claim 1, wherein
the first protrusion is longer in length in the axial direction of the rotation center than in a second direction, the second direction perpendicular to the axial direction of the rotation center and perpendicular to the first direction.

3. The damper device according to claim 1 or 2, wherein
the coupling member is provided with a recess that is located opposite the first protrusion and extends in a direction in which the first protrusion extends.

4. The damper device according to claim 2 or 3, wherein
in the second direction perpendicular to the axial direction of the rotation center and perpendicular to the first direction, the first protrusion is located between both ends of the first fixing member.

5. The damper device according to any one of claims 1 to 4, wherein
the restrictor has a circumference that faces in a direction intersecting the axial direction of the rotation center, and
the first protrusion has:
a first end that protrudes from the circumference and is apart from one edge of the circumference in the axial direction of the rotation center, and
a second end that is apart from the other edge of the circumference in the axial direction of the rotation center.

6. The damper device according to claim 5, wherein
the coupling member further includes a second protrusion that protrudes from the restrictor in the first direction and extends from the first end of the first protrusion in a direction intersecting the axial direction of the rotation center and intersecting the first direction.

7. The damper device according to any one of claims 1 to 6, wherein
the first protrusion protrudes from the restrictor to radially outside the rotation center.

8. The damper device according to any one of claims 1 to 6, wherein
the restrictor has a first surface that faces radially outside the rotation center and a second surface that faces radially inside the rotation center,
the first protrusion protrudes from the first surface to radially outside the rotation center, and
a length of the first protrusion in a radial direction of the rotation center is 0.2 to 0.8 times a distance between the first surface and the second surface.

9. The damper device according to claim 3, wherein
the restrictor has a first surface and a second surface, the first surface facing radially outside the rotation center, the second surface facing radially inside the rotation center,
the first protrusion protrudes from the first surface to radially outside the rotation center, and
the second surface is provided with the recess.

10. The damper device according to claim 9, wherein
the recess and the first protrusion have the same size.

11. The damper device according to claim 2 or 3, wherein
in the second direction perpendicular to the axial direction of the rotation center and perpendicular to the first direction, the first protrusion is shorter in length than the first fixing member and the second fixing member.

12. The damper device according to any one of claims 1 to 4, wherein
the restrictor has a circumference that faces in a direction intersecting the axial direction of the rotation center, and
the first protrusion protrudes from the circumference and extends from one edge to the other edge of the circumference in the axial direction of the rotation center.

13. The damper device according to claim 6, wherein
in the second direction perpendicular to the axial direction of the rotation center and perpendicular to the first direction, the second protrusion is shorter in length than the first fixing member and the second fixing member.
